# EUROPEAN PATENT SPECIFICATION

(11) **EP 1 679 023 B1**
(45) Date of publication and mention of the grant of the patent: **19.08.2009**
(21) Application number: 04762188.3
(22) Date of filing: 17.09.2004
(51) Int. Cl.: A47J 17/02, A47J 43/20

(54) **A CUTTING TOOL FOR MACHINING FOODSTUFF BALL**
SCHNEIDWERKZEUG ZUR HERSTELLUNG EINER NAHRUNGSMITTELKUGEL
OUTIL DE COUPE POUR LA TRANSFORMATION DE PRODUIT ALIMENTAIRE EN BOULETTES

(30) Priority: 09.10.2003 CN 200320100064
(43) Date of publication of application: 12.07.2006
(73) Proprietor: Li, Jixian, Xingtai, Hebei 054000 (CN)
(72) Inventor: Li, Jixian, Xingtai, Hebei 054000 (CN)
(74) Representative: Casalonga, Axel
(86) International application number: PCT/CN2004/001054
(87) International publication number: WO 2005/032315

(56) References cited:
- CN-Y- 2 255 798
- FR-A- 2 798 835
- JP-A- 2002 143 003
- US-A- 1 668 198
- US-A- 1 674 606
- US-A- 2 911 718
- US-A- 5 199 350

## Description

### TECHNICAL FIELD

The invention relates to a cutting tool for machining foodstuff, and more particularly, to a cutting tool for machining foodstuff, which can be rotated to form the foodstuff into a ball. By using the cutting tool, perfect ball products can be obtained from relatively hard vegetable and fruit.

### DESCRIPTION OF THE PRIOR ART

It's usually necessary for foodstuff and dining industries to provide products with figuration which are formed by the cutting tools for figuration. Nowadays, there are various kinds of cutting tools for machining foodstuff, such as vegetable or fruit, for figuration. For the purpose of machining stuff into balls, the cutting tool is now configured into a semi-spherical bowl with blade, of which a small hole, named as the gas-releasing hole, is opened on the top of the semi-spherical surface to release gas during operation for making products with figuration. The axis of the handle of the cutting tool is linearly parallel to the axis of the semi-spherical bowl with blade. Therefore, the resistance during operation is relatively strong, the force can not be applied reasonably, and the operation is extremely inconvenient. Furthermore, the bowl with blade can not be inserted into the portion best for obtaining balls of the stuff. In addition, the ball products provided thereby are not very round so that the appearances of product are not very good. A cutting tool according to the state of the art is disclosed in US-A-5199350.

### SUMMARY OF THE INVENTION

The object of the invention is directed to solve the above-stated disadvantages in the prior art, provides an improved cutting tool for machining foodstuff ball, which can be inserted into the portion best for obtaining balls of the stuff. Therefore, the operation is convenient and perfect ball products can be obtained from relatively hard vegetable or fruit.

For achieving the object of the invention, the cutting tool for machining foodstuff ball of the invention comprises a main rod body with a handle and a semi-spherical bowl with blade, wherein a connection part is mounted between the main rod body and the semi-spherical bowl with blade, the end face of the semi-spherical bowl with blade and the axis of the main rod body lie at 45-60 degrees, holes with any geometrical shape are provided on the semi-spherical surface of the semi-spherical bowl with blade, furthermore, the peripheries of the holes are formed as blades for cutting, the blades are provided in such a manner that the unnecessary part of the foodstuff to be formed as a ball can be removed and a smoother, rounder and good-looking foodstuff ball can be obtained.

For the purpose of enough rigidity of the semi-spherical cutting tool, it's preferable that the sum of areas of the holes provided thereon is generally no more than 75% of the whole area of the semi-spherical surface of the semi-spherical bowl with blade, and most preferably no more than 60%. The orientation of the blades on the peripheries of the holes are preferably consistent with that of the blades for cutting on the peripheries of the semi-spherical bowl with blade. The blades on the peripheries of the semi-spherical bowl with blade are formed as an oblique blade, a right-angle blade or a combination of an oblique blade and a right-angle blade.

The structure of the cutting tool according the invention will be described below in further details with reference to preferred embodiments taken in conjunction with the accompanying drawings, so that the effect owing to the features provided in the invention will become more apparent.

### BRIEF DESCRIPTION OF THE DRAWINGS

Fig.1 shows a schematic view illustrating the cutting tool for machining foodstuff ball according to the invention.
Fig.2 shows a schematic view illustrating the semi-spherical bowl with blade and the holes formed thereon according to an embodiment.
Fig.3 shows a schematic view illustrating the semi-spherical bowl with blade and the holes formed thereon according to another embodiment.
Fig.4 shows a schematic view illustrating the semi-spherical bowl with blade and the holes formed thereon according to still another embodiment.
Fig.5 shows a schematic view illustrating the semi-spherical bowl with blade and the holes formed thereon according to yet another embodiment.

### DESCRIPTION OF THE PREFERRED EMBODIMENTS

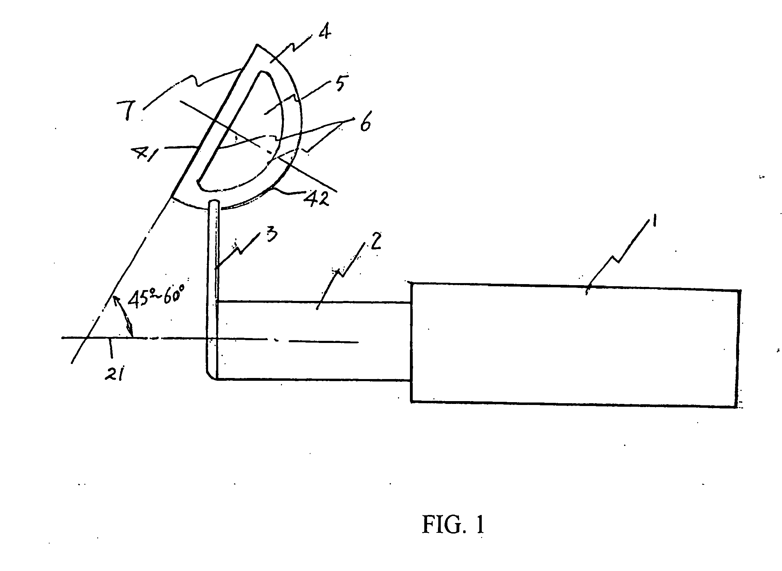

Firstly referring to Fig.1, a cutting tool for machining foodstuff ball according the invention comprises a main rod body 2 with a handle 1 and a semi-spherical bowl 4 with blade, wherein a connection part 3 is mounted between the main rod body 2 and the semi-spherical bowl 4 with blade, the end face 41 of the semi-spherical bowl 4 with blade and the axis 21 of the main rod body 2 lie at 45-60 degrees, holes 5 with any geometrical shape are provided on the semi-spherical surface 42 of the semi-spherical bowl 4 with blade, the peripheries of the holes are formed as blades 6 for cutting which can remove the unnecessary part of the foodstuff to be formed as a ball. Blades 7 are provided on the peripheries of the semi-spherical bowl 4 with blade. The blades 7 are formed as an oblique blade, a right-angle blade or a combination of an oblique blade and a right-angle blade.

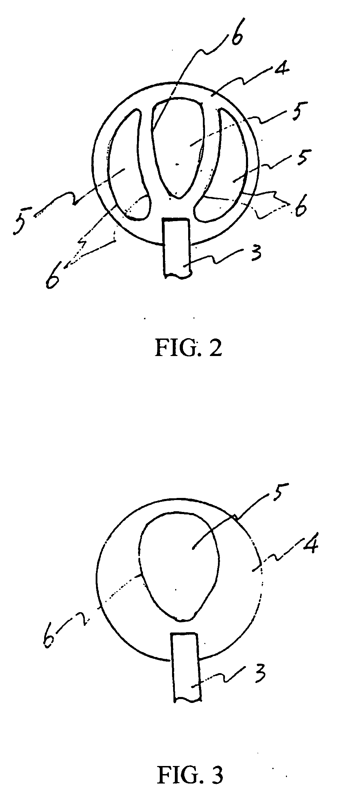

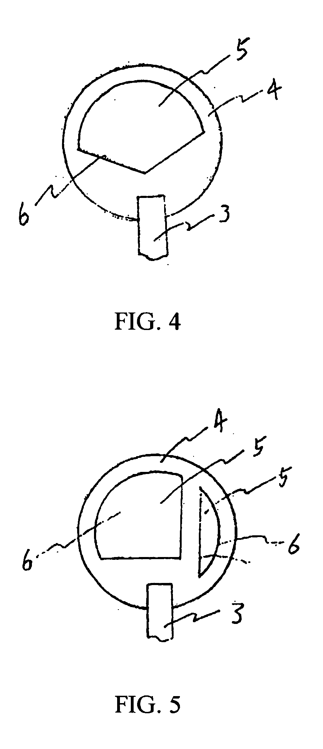

Referring to Figs.2 to 5, these drawings show the holes 5 with various geometrical shapes provided on the semi-spherical surface 42 of the semi-spherical bowl 4 with blade, and the peripheries of the holes 5 are formed as blades 6. Particularly, as shown in Fig.2, three holes are formed on the semi-spherical surface of the bowl 4 with blade wherein the hole 5 in the middle is shaped like a cone and the other two holes 5 on both sides are shaped like a banana. As shown in Fig.3, a hole 5 shaped as pear is formed on the semi-spherical surface of the bowl 4 with blade. The hole 5 shown in Fig.4 is in the shape of fan. As shown in Fig.5, two holes 5 which are entirely different on both size and shape are formed on the semi-spherical surface of the bowl 4 with blade, wherein the big hole 5 is shaped as fan and the small hole 5 is shaped as arch. As for the invention, any number of holes 5 with any shape can be formed on the semi-spherical surface of the bowl 4 with blade of which holes the peripheries are provided with blades 6 so long as it's allowed by the intensity and rigidity of the bowl 4 with blade.

For the purpose of enough rigidity of the semi-spherical bowl 4 with blade, it's preferable that the sum of areas of the holes 5 provided thereon is usually no more than 75% of the whole area of the surface of the semi-spherical bowl 4 with blade, and most preferably no more than 60% of the whole area of the surface of the semi-spherical bowl 4 with blade. The orientation of the blades 6 on the peripheries of the holes 5 is preferably consistent with that of the blades for cutting on the peripheries of the semi-spherical bowl 4 with blade.

During operation, the peripheries 7 of the bowl 4 with blade are inserted into the vegetable stuff such as potato and the bowl 4 with blade is then rotated while cutting into the vegetable to obtain a smooth foodstuff ball from the vegetable to be machined.

The above-stated are the preferable embodiments of the invention, and fall into the scope of the invention as hereinafter claimed.

## Claims

1. A cutting tool for machining foodstuff ball comprising a main rod body(2) with a handle(1) and a semi-spherical bowl(4) with blade, is **characterized in that** a connection part(3) is disposed between the main rod body(2) and the semi-spherical bowl(4) with blade, the end face(41) of the semi-spherical bowl with blade and the axis of the main rod body(2) lie at 45-60 degrees, one or more holes(5) with geometrical shapes are provided on the semi-spherical surface(42) of the semi-spherical bowl with blade and the peripheries of the holes are provided with one or more blades(6) for cutting.

2. A cutting tool for machining foodstuff ball according to claim 1, is **characterized in that** the sum of areas of the holes provided on the semi-spherical bowl(4) with blade is no more than 75% of the whole area of the surface(42) of the semi-spherical bowl with blade.

3. A cutting tool for machining foodstuff ball according to claim 2, is **characterized in that** the sum of areas of the holes(5) provided on the semi-spherical bowl(4) with blade is no more than 60% of the whole area of the surface(42) of the semi-spherical bowl with blade.

4. A cutting tool for machining foodstuff ball according to claim 1, is **characterized in that** the orientation of the blades on the peripheries of the holes is consistent with that of the blades for cutting on the peripheries of the semi-spherical bowl with blade.

5. A cutting tool for machining foodstuff ball according to claim 1, is **characterized in that** blades(7) on the peripheries of the semi-spherical bowl with blade are formed as an oblique blade, a right-angle blade or a combination of an oblique blade and a right-angle blade.

6. A cutting tool for machining foodstuff ball according to claim 1, is **characterized in that** the said holes(5) are formed in the shape of banana, fan, arch, pear or cone.

## Patentansprüche

1. Ein Schneidewerkzeug zum Herstellen von Nahrungsmittelkugeln, umfassend einen Hauptkörperstab (2) mit einem Handgriff (1) und einer halbkugelförmigen Schale (4) mit einer Schneide, **dadurch gekennzeichnet, dass** ein Verbindungsteil (3) zwischen dem Hauptkörperstab (2) und der halbkugelförmigen Schale (4) mit Schneide angeordnet ist, die Endfläche (41) der halbkugelförmigen Schale mit Schneide und die Achse des Hauptkörperstabs (2) unter 40 bis 60 Grad liegen, ein oder mehrere Löcher (5) mit geometrischen Formen auf der halbkugelförmigen Oberfläche (42) der halbkugelförmigen Schale mit Schneide vorgesehen sind, und die Umkreise der Löcher mit einer oder mehreren Schneiden (6) zum Schneiden versehen sind.

2. Ein Schneidwerkzeug zum Herstellen einer Nahrungsmittelkugel nach Anspruch 1, **dadurch gekennzeichnet, dass** die Summe der Flächen der in der halbkugelförmigen Schale (4) mit Schneide bereitgestellten Löcher nicht mehr als 75 % der Gesamtfläche der Oberfläche (42) der halbkugelförmigen Schale mit Schneide ist.

3. Ein Schneidwerkzeug zum Herstellen einer Nahrungsmittelkugel nach Anspruch 2, **dadurch gekennzeichnet, dass** die Summe der Flächen der auf der halbkugelförmigen Schale (4) mit Schneide bereitgestellten Löcher (5) nicht mehr als 60 % der Gesamtfläche der Oberfläche (42) der halbkugelförmigen Schale mit Schneide ist.

4. Ein Schneidwerkzeug zum Herstellen einer Nahrungsmittelkugel nach Anspruch 1, **dadurch gekennzeichnet, dass** die Orientierung der Schneiden auf den Umkreisen der Löcher mit der der Schneiden zum Schneiden auf den Umkreisen der halbkugelförmigen Schale mit Schneide konsistent ist.

5. Ein Schneidwerkzeug zum Herstellen einer Nahrungsmittelkugel nach Anspruch 1, **dadurch gekennzeichnet, dass** die Schneiden (7) auf den Umkreisen der halbkugelförmigen Schale mit Schneide als eine schräge Schneide, eine rechtwinklige Schneide oder eine Kombination aus einer schrägen Schneide und einer rechtwinkligen Schneide ausgebildet sind.

6. Ein Schneidwerkzeug zum Herstellen einer Nahrungsmittelkugel nach Anspruch 1, **dadurch gekennzeichnet, dass** die Löcher (5) in der Form einer Banane, eines Fächers, eines Bogens, einer Birne oder eines Kegels ausgebildet sind.

## Revendications

1. Outil coupant pour façonner une boule de produit alimentaire, comprenant un corps de tige principal (2) avec un manche (1) et une calotte hémisphérique (4) à lame, **caractérisé en ce qu'**une partie de raccordement (3) est agencée entre le corps de tige principal (2) et la calotte hémisphérique (4) à lame, la face d'extrémité (41) de la calotte hémisphérique à lame et l'axe du corps de tige principal (2) forment un angle de 45-60 degrés, un ou plusieurs trous (5) de formes géométriques sont formés sur la surface hémisphérique (42) de la calotte hémisphérique à lame et les périphéries des trous sont munies d'une ou plusieurs lames (6) de coupe.

2. Outil coupant pour façonner une boule de produit alimentaire selon la revendication 1, **caractérisé en ce que** la somme des aires des trous formés sur la calotte hémisphérique (4) à lame n'est pas supérieure à 75% de l'aire totale de la surface (42) de la calotte hémisphérique à lame.

3. Outil coupant pour façonner une boule de produit alimentaire selon la revendication 2, **caractérisé en ce que** la somme des aires des trous (5) formés sur la calotte hémisphérique (4) à lame n'est pas supérieure à 60% de l'aire totale de la surface (42) de la calotte hémisphérique à lame.

4. Outil coupant pour façonner une boule de produit alimentaire selon la revendication 1, **caractérisé en ce que** l'orientation des lames sur les périphéries des trous est cohérente avec celle des lames de coupe sur la périphérie de la calotte hémisphérique à lame.

5. Outil coupant pour façonner une boule de produit alimentaire selon la revendication 1, **caractérisé en ce que** des lames (7) sur la périphérie de la calotte hémisphérique à lame sont formées comme une lame oblique, une lame à angle droit ou une combinaison d'une lame oblique et d'une lame à angle droit.

6. Outil coupant pour façonner une boule de produit alimentaire selon la revendication 1, **caractérisé en ce que** lesdits trous (5) sont façonnés en forme de banane, d'éventail, d'arcade, de poire ou de cône.
